# EUROPÄISCHE PATENTSCHRIFT

(11) **EP 2 421 698 B1**
(45) Veröffentlichungstag und Bekanntmachung des Hinweises auf die Patenterteilung: **08.06.2016**
(21) Anmeldenummer: 10718475.6
(22) Anmeldetag: 21.04.2010
(51) Int. Cl.: B32B 5/18, B32B 27/08, B32B 27/32

(54) **ETIKETTENFOLIE**
LABEL FILM
FEUILLE D'ÉTIQUETTES

(30) Priorität: 24.04.2009 DE 102009018543; 30.04.2009 DE 102009019323
(43) Veröffentlichungstag der Anmeldung: 29.02.2012
(73) Patentinhaber: Treofan Germany GmbH & Co. KG, 66539 Neunkirchen (DE)
(72) Erfinder: JUNG, Joachim, 66540 Neunkirchen (DE); DÜPRE, Yvonne, 67677 Enkenbach-Alsenborn (DE)
(74) Vertreter: Kremer, Viola
(86) Internationale Anmeldenummer: PCT/EP2010/002449
(87) Internationale Veröffentlichungsnummer: WO 2010/121802

(56) Entgegenhaltungen:
- WO-A1-02/45956
- WO-A1-2004/014650
- WO-A1-2009/010178
- WO-A1-2009/052921
- US-A1- 2007 003 777

## Beschreibung

Die vorliegende Erfindung betrifft eine beidseitig rauhe biaxial orientierte Polypropylenfolie und deren Verwendung als Etikett.

Etikettenfolien umfassen ein umfangreiches und technisch komplexes Gebiet. Man unterscheidet verschiedene Etikettiertechniken, welche hinsichtlich der Prozeßbedingungen grundverschieden sind und zwangsläufig an die Etikettenmaterialien unterschiedliche technische Anforderungen stellen. Allen Etikettierprozeßen ist gemeinsam, daß als Endergebnis optisch ansprechend etikettierte Behältnisse resultieren müssen.

Bei den Etikettierverfahren werden sehr verschiedene Techniken zum Applizieren des Etiketts angewendet. Man unterscheidet zwischen Selbstklebeetiketten, Rundumetiketten, Schrumpfetiketten, In-Mould Etiketten, Patch Labelling etc. Die Verwendung einer Folie aus thermoplastischem Kunststoff als Etikett ist in allen diesen verschiedenen Etikettierverfahren möglich.

Allen In-Mould Etikettierverfahren ist gemeinsam, daß das Etikett am eigentlichen Formgebungsverfahren des Behälters teilnimmt und währenddessen appliziert wird. Hierbei kommen verschiedene Formgebungsverfahren zum Einsatz, wie beispielsweise Spritzgußverfahren, Blasformverfahren, Tiefziehverfahren.

Beim Spritzgußverfahren werden einzelne Etiketten einem Stapel entnommen oder von einer Rolle zugeschnitten und in die Spritzgußform eingelegt. Die Form ist dabei so gestaltet, daß der Schmelzestrom hinter das Etikett gespritzt wird und die Vorderseite der Folie an der Wandung der Spritzgußform anliegt. Beim Spritzen verbindet sich die heiße Schmelze mit dem Etikett. Nach dem Spritzen öffnet sich das Werkzeug, der Spritzling mit Etikett wird ausgestoßen und kühlt ab. Im Ergebnis muß das Etikett faltenfrei und optisch einwandfrei auf dem Behälter haften.

Auch beim Blasformen ist eine direkte In-Mould Etikettierung möglich. Bei diesem Verfahren wird ein Schmelzeschlauch durch eine Ringdüse vertikal nach unten extrudiert. Ein vertikal geteiltes Formwerkzeug fährt zusammen und umschließt den Schlauch, der dabei am unteren Ende zugequetscht wird. Am oberen Ende wird ein Blasdorn eingeführt durch den die Öffnung des Formlings ausgebildet wird. Über den Blasdorn wird dem warmen Schmelzeschlauch Luft zugeführt, so daß er sich ausdehnt und sich an die Innenwände des Formwerkzeugs anlegt. Hierbei muß sich das Etikett mit dem zähflüssigen Kunststoff des Schmelzeschlauchs verbinden. Anschließend wird die Form geöffnet und der Überstand an der geformten Öffnung abgeschnitten. Der geformte und etikettierte Behälter wird ausgestoßen und kühlt ab.

Beim Tiefziehen werden unorientierte dicke Kunststoffplatten, meist gegossenes PP oder PS (Polystyrol), in einer Dicke von ca. 200 - 750 µm erwärmt und mittels Vakuum oder Stempelwerkzeugen in ein entsprechendes Formwerkzeug gezogen oder gedrückt. Auch hierbei wird das einzelne Etikett in die Form eingelegt und verbindet sich beim Formprozeß mit dem eigentlichen Behälter. Es kommen erheblich niedrigere Temperaturen zur Anwendung, so daß die Haftung des Etiketts an dem Behälter ein kritischer Faktor sein kann.

Grundsätzlich können bei allen diesen In-mould Verfahren Folien aus thermoplastischen Kunststoffen zur Etikettierung der Behältnisse beim Formen eingesetzt werden. Die Folien müssen hierzu ein ausgewähltes Eigenschaftsprofil aufweisen, um zu gewährleisten, daß sich die Etikettenfolie und der geformte Formkörper glatt und blasenfrei aneinander schmiegen und sich miteinander verbinden. Häufig ist die Haftung des Etiketts auf dem Behälter mangelhaft. Des weiteren treten Lufteinschlüsse zwischen Etikett und Behälter auf, welche die Optik des etikettierten Behälters als auch die Haftung beeinträchtigen. Bei der In-Mould Etikettierung wird die Geschwindigkeit des Prozesses im wesentlichen von der Zeit bestimmt, die zur Formung des Behälters benötigt wird. Die entsprechenden Taktzeiten mit denen die Etiketten in diesen Verfahren gegebenenfalls entstapelt und gehandhabt werden sind vergleichsweise moderat.

Im Stand der Technik sind verschiedenste Folien beschrieben, welche im Hinblick auf ihre Verwendung als In-Mould Etikett optimiert sind. Häufig weisen diese Folien eine rauhe innere, d.h. dem Behälter zugewandte Oberfläche auf, um die Lufteinschlüsse zwischen dem Behälter und dem Etikett zu vermeiden. Die äußere Oberfläche ist hingegen so optimiert, daß keine Grenze zwischen dem applizierten Etikett und dem Behälter zu erkennen ist, weshalb die In-Mould Etiketten glänzende äußere Oberflächen mit einer geringen Rauheit aufweisen. Die Entstapelung solcher Folien beim In-Mould Etikettieren ist unproblematisch. Im allgemeinen trägt die vakuolenhaltige Basisschicht zu einer geringen Rauheitserhöhung auch auf der Glanzseite des Etiketts bei, so daß eine innere Deckschicht mit hoher Rauheit aus inkompatiblen Polymeren ausreicht, um die gute Enstapelbarkeit sicherzustellen.

Neben der guten Entstapelbarkeit ist eine gute Steifigkeit der Folien bei der Verwendung als Etikett besonders wünschenswert. Eine hohe Steifigkeit trägt gleichfalls zu einer problemlosen Verarbeitbarkeit der Folien beim Etikettierprozeß oder bei der vorherigen Bedruckung bei. Insbesondere im Druckprozeß hängt die Verarbeitungsgeschwindigkeit unmittelbar mit der Steifigkeit der Folie zusammen. Beispielsweise lassen sich die Folienzuschnitte bei einer zu geringen Steifigkeit nicht mit hinreichender Präzision in der Druckmaschine positionieren. Es ist im Stand der Technik bekannt die Steifigkeit von opaken Folien durch besonders dicke Zwischenschichten ohne Vakuolen zu erhöhen. Auch die Verwendung von hochisotaktischen oder hochkristallinen Polypropylenen kann die Steifigkeit verbessern.

Im Rahmen der vorliegenden Erfindung wurde gefunden, daß diese Maßnahmen zur Erhöhung der Steifigkeit gleichzeitig zu einer verringerten Rauheit der äußeren Oberfläche der Folie führt, so daß trotz erhöhter Steifigkeit die problemlose Verarbeitung der Folie beeinträchtigt ist. Sowohl beim Bedrucken der Zuschnitte, als auch beim Vereinzeln der Etiketten kommt es trotz höherer Steifigkeit zu vermehrten Störungen bei der Verarbeitung. Diese Beeinträchtigung wird durch eine innere Deckschicht mit hoher Oberflächenrauheit nicht behoben.

In der PCT Anmeldung PCT/EP 2008/008242 sind mehrschichtige, opake Folien für Rundumetiketten beschrieben, welche aus einer vakuolenhaltigen Basisschicht B und beidseitig darauf aufgebrachten Zwischenschichten und beidseitigen Deckschicht aufgebaut sind. Die beide Deckschichten enthalten eine Mischung aus inkompatiblen Polymeren und weisen eine Oberflächenrauheit Rz von mindestens 2,5µm (bei cut off 0,25mm) auf. Die Folien sind auch als großformatige Bögen sehr gut zu entstapeln und könne sehr gut als Rundumetikett eingesetzt werden. Diesen Folien haftet der Nachteil an, daß das Druckbild durch die hohe Oberflächenrauheit auf der Außenseite negativ beeinflußt wird.

Es war daher Aufgabe der vorliegenden Erfindung eine Folie zur Verfügung zu stellen, welche hinsichtlich der Handhabung und Enstapelbarkeit verbessert ist und gleichzeitig das Druckbild durch die hohe Oberflächenrauheit auf der Außenseite nicht negativ beeinflusst wird. Die Folie muß sich sowohl beim Bedrucken gut vereinzeln als auch im Etikettierprozeß mit hohen Taktzahlen gut entstapeln lassen.

Diese Aufgabe wird gelöst durch eine mehrschichtige, opake, biaxial orientierte Polyolefinfolie mit einer Dicke von mindestens 30µm aus einer vakuolenhaltigen Basisschicht und beidseitig darauf aufgebrachten Zwischenschichten und beidseitigen Deckschichten, dadurch gekennzeichnet, daß beide Zwischenschichten eine Dicke von mindestens 3µm aufweisen und mindestens 70 Gew.-% eines Propylenhomopolymeren enthalten und beide Deckschichten aus einer Mischung aus inkompatiblen Polymeren aufgebaut sind und die innere Deckschicht eine Oberflächenrauheit Rz von mindestens 3,0µm (cut off 0,25mm) und die äußere Deckschicht eine Rauheit Rz von 1 bis 3µm (cut off 0,25mm) aufweist, wobei die Rauheit der inneren Deckschicht um mindestens 1,5 Einheiten größer ist als die Rauheit der äußeren Deckschicht. Die Unteransprüche geben bevorzugte Ausführungsformen der Erfindung an.

Im Rahmen der vorliegenden Erfindung wurde gefunden, daß die Folien alle vorstehend genannten Anforderungen beim Einsatz als Etikett erfüllen, wenn beidseitig Zwischenschichten im wesentlichen aus Propylenhomopolymer und beidseitig rauhe Deckschichten angebracht sind, wobei die Oberflächenrauheit der beiden Deckschichten durch eine Mischung von zwei inkompatiblen Polymeren erzeugt wird und die Rauheit der äußeren Oberfläche in einem engen Bereich von 1 bis 3 µm liegt und die Rauheit der inneren Deckschicht höher ist als die Rauheit der äußeren Deckschicht.

Die Abmischung der inkompatiblen Polymeren, wie beispielsweise Propylen-Co- und/oder Propylen-Terpolymeren mit einem unverträglichen Polyethylen, erzeugt in an sich bekannter Weise eine Oberflächerauheit. Es wurde überraschenderweise gefunden, daß zwei derartige rauhe Oberflächen die Entstapelbarkeit und das Vereinzeln, wesentlich verbessern. Des weiteren war es sehr überraschend, daß auch die Homopolymer-Zwischenschichten zu einer verbesserten Entstapelbarkeit beitragen. Es wurde erwartet, daß derartige Propylenhomopolymer Zwischenschichten die Oberflächenrauheit der Folie herabsetzen und damit das Entstapeln und Vereinzeln verschlechtern. Es ist im Stand der Technik bekannt, daß Homopolymer-Zwischenschichten zur Verbesserung des Oberflächenglanzes von opaken Folien eingesetzt werden. Es lag daher nicht nahe in eine beidseitig rauhe Folie beidseitig an sich glanzverbessernde Zwischenschichten einzubauen, da hierdurch eine Reduzierung der Rauheit und damit eine schlechtere Entstapelbarkeit zu erwarten war. Überraschenderweise wurde jedoch gefunden, daß sich die Entstapelbarkeit durch die Zwischenschichten verbessert und vergleichsweise weniger Störungen sowohl beim Bedrucken als auch bei der Verwendung als Etikett auftreten, wenn beide Oberflächen jeweils die angegebene Rauheit aufweisen.

Für die vorliegende Erfindung ist es somit wesentlich, daß mehrere strukturelle Merkmale erfüllt sind. Die Folie muß auf beiden Seiten eine Deckschicht aus inkompatiblen Polymeren aufweisen, die Rauheit Rz der äußeren Deckschicht muß in einem Bereich von 1 - 3 µm liegen, die inneren Deckschicht muß eine höhere Rauheit aufweisen, welche mindestens 3µm beträgt und die Folie muß beidseitig Zwischenschichten aus Polypropylen haben. Nur wenn alle diese Strukturmerkmale erfüllt sind, läßt sich die Folie in Form großer Bögen gut verarbeiten und bei der Verwendung als Etikett schnell und zuverlässig entstapeln und zeigt eine ansprechende Optik nach der Bedruckung auf der Außenseite.

Die Folie umfaßt somit mindestens fünf Schichten, wobei die Basisschicht die zentrale innere Schicht ist, die die größte Dicke aller Schichten aufweist. Die Zwischenschichten sind zwischen der Basisschicht und den Deckschichten angebracht, im allgemeinen direkt auf den jeweiligen Oberflächen der Basisschicht. Deckschichten sind naturgemäß die äußeren Schichten der Folie, die sich bei fünfschichtigen Ausführungsformen direkt auf den Zwischenschichten befinden. Soweit es die gewünschten Eigenschaften der Folie nicht beeinträchtigt kann die Folie zusätzlich weitere Schichten aufweisen.

Beide Deckschichten enthalten als erfindungswesentliche Bestandteile Propylenhomopolymer, Co- und/oder Terpolymer aus Propylen, Ethylen und/oder Butylen-Einheiten und Polyethylen.

Im allgemeinen enthält die innere Deckschichten mindestens 30 bis 90 Gew.-%, vorzugsweise 45 bis 80 Gew.-%, insbesondere 50 bis 80 Gew.-% des Propylen-Homo-, Co- und/oder Terpolymeren und 10 bis 70 Gew.-%, vorzugsweise 20 bis 55 Gew.-%, insbesondere 20 bis 50 Gew.-% des Polyethylens, bezogen auf das Gewicht der jeweiligen Deckschicht, sowie gegebenenfalls zusätzlich übliche Additive in jeweils wirksamen Mengen. Der Anteil an Polymeren reduziert sich entsprechend geringfügig bei Zumischung derartiger Additive. Die innere Deckschicht ist im Sinne der vorliegenden Erfindung diejenige Schicht deren Oberfläche bei der Verwendung als Etikett dem etikettierten Behälter zugewandt ist.

Im allgemeinen enthält die äußere Deckschichten mindestens 65 bis 98 Gew.-%, vorzugsweise 70 bis 97 Gew.-%, insbesondere 75 bis 95 Gew.-% des Propylen-Homo-, Co- und/oder Terpolymeren und 2 bis 35 Gew.-%, vorzugsweise 3 bis 30 Gew.-%, insbesondere 5 bis 25 Gew.-% des Polyethylens, bezogen auf das Gewicht der jeweiligen Deckschicht, sowie gegebenenfalls zusätzlich übliche Additive in jeweils wirksamen Mengen. Der Anteil an Polymeren reduziert sich entsprechend geringfügig bei Zumischung derartiger Additive. Die äußere Deckschicht ist im Sinne der vorliegenden Erfindung diejenige Schicht deren Oberfläche bei der Verwendung als Etikett nach außen gewandt und sichtbar ist.

Geeignete Propylenpolymere und Ethylenpolymere für beide Deckschichten werden nachstehend näher beschrieben. Es können die gleichen Polymere in den vorstehend angegeben Mengen in den jeweiligen Deckschichten eingesetzt werden. Es können auch verschiedene Polymere für die innere und äußere Deckschicht ausgewählt werden.

Für die Deckschichten geeignete Co- oder Terpolymere sind aus Ethylen, Propylen oder Butylen-Einheiten aufgebaut, wobei Terpolymere drei verschiedene Monomere enthalten. Die Zusammensetzung der Co- oder Terpolymeren aus den jeweiligen Monomeren kann innerhalb der nachstehend beschriebenen Grenzen variieren. Im allgemeinen enthalten die Co- und/oder Terpolymeren über 50 Gew.-% PropylenEinheiten, d.h es sind Propylenco- und/oder Propylenterpolymere mit Ethylen- und/oder Butylen-Einheiten als Comonomere. Copolymere enthalten im allgemeinen mindestens 60 - 99 Gew.-%, vorzugsweise 65 bis 97 Gew.-% Propylen und höchstens 1 - 40 Gew.-%, vorzugsweise 3 bis 35 Gew.-% Ethylen oder Butylen als Comonomer. Terpolymere enthalten im allgemeinen 65 bis 96 Gew.-%, vorzugsweise 72 bis 93 Gew.-% Propylen, und 3 bis 34 Gew.-%, vorzugsweise 5 bis 26 Gew.-% Ethylen und 1 bis 10 Gew.-%, vorzugsweise 2 bis 8 Gew.-% Butylen. Der Schmelzindex der Co- und/oder Terpolymeren beträgt im allgemeinen 0,1 bis 20 g/10min (190°C, 21,6N), vorzugsweise 0,1 bis 15 g/10min. Der Schmelzpunkt kann in einem Bereich von 70 bis 150°C liegen, vorzugsweise 100 bis 140°C.

Gegebenenfalls können die vorstehend genannten Co- und Terpolymeren untereinander gemischt werden. Hierbei können die Anteile von Co- zu Terpolymer in beliebigen Grenzen variieren. Diese Mischung wird dann in den vorstehend, für die jeweiligen Co- und Terpolymeren beschriebenen Mengen, in jeder Deckschicht eingesetzt.

In einer weiteren Ausführungsform kann statt oder zusätzlich zu den genannten Co- und/oder Terpolymeren auch Propylenhomopolymer verwendet werden. Diese Modifikation kann eine verkürzte Haltbarkeit der Oberflächen-Vorbehandlung aufweisen, so daß diese Ausführungsform nicht bevorzugt aber möglich ist. Die Homopolymeren werden in den für die Co- und Terpolymeren beschriebenen Mengen eingesetzt. Geeignete Propylenhomopolymere sind solche, die nachstehend im Einzelnen als Propylenhomopolymer der Basisschicht beschrieben werden. Gegebenenfalls können die Homopolymeren auch mit den Co- und/oder Terpolymer gemischt werden. Der Anteil an Co- und/oder Terpolymer wird dann entsprechend um den Anteil an Homopolymer reduziert.

Es ist erfindungswesentlich, daß für die innere Deckschicht die Anteile und Art der Co- und/oder Terpolymeren, gegebenenfalls Homopolymer, und Polyethylen so gewählt werden, daß die Oberflächenrauheit Rz der inneren Deckschicht mindestens 3µm beträgt, vorzugsweise 3 bis 8µm beträgt. Gegebenenfalls sind weitere Maßnahmen wie Oberflächenbehandlung und Schichtdicken und Pigmentierung der Zwischenschicht, beispielsweise mit Weißpigment wie TiO₂ und Zusatz von Antiblockmittel so zu wählen, daß dieser Rz-Wert erfüllt wird. Es ist zusätzlich erfindungswesentlich, daß für die äußere Deckschicht die Anteile und Art der Co- und/oder Terpolymeren, gegebenenfalls Homopolymer, und Polyethylen so gewählt werden, daß die Oberflächenrauheit Rz der äußeren Deckschicht mindestens 1 bis 3µm beträgt, vorzugsweise 1,5 bis 2,5µm beträgt. Auch für die Rauheit der äußere Deckschicht sind weitere Maßnahmen wie Oberflächenbehandlung und Schichtdicken und Pigmentierung der Zwischenschicht, beispielsweise mit Weißpigment wie TiO₂ und Zusatz von Antiblockmittel so zu wählen, daß dieser Rz-Wert erfüllt wird.

Im allgemeinen sind beide Deckschichten im wesentlichen frei von partikelförmigen Füllstoffen, d.h. im allgemeinen liegt deren Menge unter 5 Gew.-%, vorzugsweise unter 2 Gew.-%, um die Nachteile wie Auskreiden zu vermeiden, zusätzlich verschlechtert sich durch Füllstoffe das Druckbild. Diese Empfehlung steht der zusätzlichen Einarbeitung von Antiblockmitteln, die im allgemeinen in einer Menge von unter 2 Gew.-% eingesetzt werden, nicht entgegen.

Die zweite erfindungswesentliche Komponente der beiden Deckschichten ist ein Polyethylen, welches mit den vorstehend beschriebenen Co- und/oder Terpolymeren, gegebenenfalls Propylenhomopolymeren, unverträglich ist. Unverträglich bedeutet in diesem Zusammenhang, daß durch die Mischung der Propylenhomopolymeren, Co- und/oder Terpolymeren mit dem Polyethylen eine Oberflächenrauheit gebildet wird. Es wird angenommen, daß diese Rauheit durch die zwei separaten Phasen entsteht, die die nicht mischbaren Polymeren bilden. Geeignete Polyethylene sind beispielsweise HDPE oder MDPE. Das HDPE weißt im allgemeinen die nachstehend beschriebenen Eigenschaften auf, beispielsweise einen MFI (50 N/190 °C) von größer 0,1 bis 50 g/10 min, vorzugsweise 0,6 bis 20 g/10min, gemessen nach DIN 53 735 und eine Viskositätszahl, gemessen nach DIN 53 728, Teil 4, oder ISO 1191, im Bereich von 100 bis 450 cm³/g, vorzugsweise 120 bis 280 cm³/g. Die Kristallinität beträgt im allgemeinen 35 bis 80 %, vorzugsweise 50 bis 80 %. Die Dichte, gemessen bei 23 °C nach DIN 53 479, Verfahren A, oder ISO 1183, liegt im Bereich von >0,94 bis 0,96 g/cm³. Der Schmelzpunkt, gemessen mit DSC (Maximum der Schmelzkurve, Aufheizgeschwindigkeit 20 °C/min), liegt zwischen 120 und 140°C. Geeignetes MDPE hat im allgemeinen einen MFI (50 N/190 °C) von größer 0,1 bis 50 g/10 min, vorzugsweise 0,6 bis 20 g/10min, gemessen nach DIN 53 735. Die Dichte, gemessen bei 23 °C nach DIN 53 479, Verfahren A, oder ISO 1183, liegt im Bereich von >0,925 bis 0,94 g/cm³. Der Schmelzpunkt, gemessen mit DSC (Maximum der Schmelzkurve, Aufheizgeschwindigkeit 20 °C/min), liegt zwischen 115 und 135°C.

Gegebenenfalls kann jede Deckschicht weitere olefinische Polymere in geringen Mengen enthalten, soweit dadurch nicht die Funktionalität, insbesondere die erfindungswesentliche Oberflächenrauheit gestört wird. Hier kommen beispielsweise Polyolefine in Frage, die über Additiv-Batche in die jeweilige Deckschicht eingearbeitet werden.

Für die Deckschichten werden bevorzugt Propylen-Ethylen-Copolymere in Abmischung mit MDPE oder HDPE eingesetzt. Vorzugsweise beträgt der Ethylengehalt der Copolymeren 2 bis 10 Gew.-% und der Schmelzpunkt liegt in einem Bereich von 120 - 135°C. Besonders vorteilhaft wird die Oberfläche der äußeren Deckschicht einer Corona-Behandlung unterworfen.

Die Schichtdicke der inneren Deckschicht beträgt im allgemeinen 2 bis 10µm, vorzugsweise 2,5 bis 8 µm, insbesondere 3 bis 6 µm. Eine erhöhte Deckschichtdicke von mindestens 2,5µm trägt vorteilhaft zur Erhöhung der Rauheit bei. Die Schichtdicke der äußeren Deckschicht beträgt im allgemeinen 0,5 bis 5µm, vorzugsweise 1 bis 3 µm. Eine dünnere Deckschichtdicke ermöglicht die Einstellung der Rauheit Rz im erfindungsgemäßen Bereich von 1 bis 3µm.

Die Oberflächenrauheiten Rz der beiden Deckschicht unterscheiden sich um mindestens 1,5µm, wobei die innere Deckschicht eine höhere Rauheit als die äußere Deckschicht aufweist. Im allgemeinen beträgt der Unterschied 1,8 bis 8 µm, vorzugsweise 2 bis 5 µm.

Es wurde in Rahmen der vorliegenden Erfindung gefunden, daß die Oberflächenrauheit der äußeren Deckschicht in einem engen Bereich von 1-3 µm liegen muß und die Rauheit der inneren Deckschicht deutlich höher sein muß, damit die Folie alle Anforderung bei der Verwendung als Etikettenfolie erfüllt.

In einer besonders bevorzugten Ausführungsform wird eine oder werden beide Oberflächen Corona-, Plasma- oder Flamm-behandelt. Diese Behandlung verbessert auf der äußeren Oberfläche die Hafteigenschaften für eine anschließende Dekoration und Bedruckung, d.h. um die Benetzbarkeit mit und Haftung von Druckfarben und sonstigen Dekorationsmitteln zu gewährleisten. Gegebenenfalls kann auf der Oberfläche der äußeren Deckschicht einseitig metallisiert werden.

Jede der beiden Deckschichten kann zusätzlich übliche Additive wie Neutralisationsmittel, Stabilisatoren, Antistatika, Antiblockmittel und/oder Gleitmittel in jeweils wirksamen Mengen enthalten. Die nachstehenden Angaben in Gew.-% beziehen sich auf das Gewicht der jeweiligen Deckschicht.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen oder vernetzte Polymere wie vernetztes Polymethylmethacrylat oder vernetzte Siliconöle. Die mittlere Teilchengröße liegt zwischen 1 und 6µm, insbesondere 2 und 5 µm. Die wirksame Menge an Antiblockmittel liegt im Bereich von 0,1 bis 2 Gew.-%, vorzugsweise 0,5 bis 1,5 Gew.-%.

Gleitmittel sind höhere aliphatische Säureamide, höhere aliphatische Säureester und Metallseifen sowie Polydimethylsiloxane. Die wirksame Menge an Gleitmittel liegt im Bereich von 0,01 bis 3 Gew.-%, vorzugsweise 0,02 bis 1 Gew.-% bezogen auf die innere Deckschicht. Besonders geeignet ist der Zusatz von 0,02 bis 0,5 Gew.-% Polydimethylsiloxanen, insbesondere Polydimethylsiloxane mit einer Viskosität von 5 000 bis 1 000 000 mm2/s.

Die Folie weist erfindungsgemäß zwischen der opaken Basisschicht und den beiden rauhen Deckschichten beidseitig zusätzliche Zwischenschichten auf. "Opake Folie" bedeutet im Sinne der vorliegenden Erfindung eine undurchsichtige Folie, deren Lichtdurchlässigkeit (ASTM-D 1003-77) höchstens 70 %, vorzugsweise höchstens 50 %, beträgt.

Die opake Basisschicht der Folie enthält mindestens 70 Gew.-%, vorzugsweise 75 bis 99 Gew.-%, insbesondere 80 bis 98 Gew.-%, jeweils bezogen auf das Gewicht der Basisschicht, Polyolefine bzw. Propylenpolymeren, vorzugsweise Propylenhomopolymere und vakuoleninitierende Füllstoffe.

Im allgemeinen enthält das Propylenpolymer mindestens 90 Gew.-%, vorzugsweise 94 bis 100 Gew.-%, insbesondere 98 bis <100 Gew.-%, Propylen. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen. Die Angaben in Gew.-% beziehen sich jeweils auf das Propylenpolymere.

Bevorzugt sind isotaktische Propylenhomopolymere mit einem Schmelzpunkt von 140 bis 170 °C, vorzugsweise von 150 bis 165 °C, und einen Schmelzflußindex (Messung DIN 53 735 bei 21,6 N Belastung und 230 °C) von 1,0 bis 10g/10min, vorzugsweise von 1,5 bis 6,5 g/10 min. Der n-heptanlösliche Anteil beträgt im allgemeinen 0,5 bis 10 Gew.-%, vorzugsweise 2 bis 5 Gew.-% bezogen auf das Ausgangspolymere. Die Molekulargewichtsverteilung des Propylenpolymeren kann variieren. Das Verhältnis des Gewichtsmittels Mw zum Zahlenmittel Mn liegt im allgemeinen zwischen 1 und 15, vorzugsweise bei 2 bis 10, ganz besonders bevorzugt bei 2 bis 6. Eine derartig enge Molekulargewichtsverteilung. des Propylenhomopolymeren der Basisschicht erreicht man beispielsweise durch dessen peroxidischen Abbau oder durch Herstellung des Polypropylens mittels geeigneter Metallocenkatalysatoren. Für die Zwecke der vorliegenden Erfindung sind auch hochisotaktische bzw. hockkristalline Polypropylene geeignet, deren Isotaktizität nach ¹³C-NMR mindestens 95%, vorzugsweise 96 - 99% beträgt. Derartige hochisotaktischen Polypropylene sind an sich im Stand der Technik bekannt und werden sowohl als HIPP als auch als HCPP bezeichnet.

Die opake Basisschicht enthält vakuoleninitierende Füllstoffe in einer Menge von maximal 30 Gew.-%, vorzugsweise 1 bis 15 Gew.-%, insbesondere 2 bis 10 Gew.-%, bezogen auf das Gewicht der Basisschicht. Zusätzlich zu den vakuoleninitierenden Füllstoffen kann die Basisschicht Pigmente enthalten, beispielsweise in einer Menge von 0,5 bis 10 Gew.-%, vorzugsweise 1 bis 8 Gew.-%, insbesondere 1 bis 5 Gew.-%. Die Angaben beziehen sich auf das Gewicht der Basisschicht.

Pigmente sind im Sinne der vorliegenden Erfindung unverträgliche Teilchen, die im wesentlichen nicht zur Vakuolenbildung beim Verstrecken der Folie führen. Die färbende Wirkung der Pigmente wird durch die Teilchen selbst verursacht. "Pigmente" haben im allgemeinen einen mittleren Teilchendurchmesser von 0,01 bis maximal 1 µm, vorzugsweise 0,01 bis 0,7 µm , insbesondere 0,01 bis 0,4 µm. Pigmente umfassen sowohl sogenannte "Weißpigmente", welche die Folien weiß einfärben, als auch "Buntpigmente", welche der Folie eine bunte oder schwarze Farbe verleihen. Übliche Pigmente sind Materialien wie z.B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden.

Die Titandioxidteilchen bestehen im allgemeinen zu mindestens 95 Gew.-% aus Rutil und werden bevorzugt mit einem Überzug aus anorganischen Oxiden und/oder aus organische Verbindungen mit polaren und unpolaren Gruppen eingesetzt. Derartige Beschichtungen des TiO2 sind im Stand der Technik bekannt.

Im Sinne der vorliegenden Erfindung sind "vakuoleniniziierende Füllstoffe" feste Teilchen die mit der Polymermatrix unverträglich sind und beim Verstrecken der Folien zur Bildung von vakuolenartigen Hohlräumen führen, wobei Größe, Art und Anzahl der Vakuolen von der Größe und der Menge der festen Teilchen und den Streckbedingungen wie Streckverhältnis und Strecktemperatur abhängig sind. Die Vakuolen reduzieren die Dichte und geben den Folien ein charakteristisches perlmuttartiges, opakes Aussehen, welches durch Lichtstreuung an den Grenzflächen "Vakuole/Polymermatrix" entsteht. Die Lichtstreuung an den festen Teilchen selbst trägt zur Opazität der Folie im allgemeinen vergleichsweise wenig bei. In der Regel haben die vakuoleniniziierenden Füllstoffe eine Mindestgröße von 1 µm, um zu einer effektiven, d.h. opak machenden Menge an Vakuolen zu führen. Im allgemeinen beträgt der mittlere Teilchendurchmesser der Teilchen 1 bis 6 µm, vorzugsweise 1,5 bis 5 µm. Der chemische Charakter der Teilchen spielt eine untergeordnete Rolle, sofern Unverträglichkeit vorliegt.

Übliche vakuoleniniziierende Füllstoffe sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum) und Siliciumdioxid, worunter Calciumcarbonat und Siliciumdioxid bevorzugt eingesetzt werden. Als organische Füllstoffe kommen die üblicherweise verwendeten, mit dem Polymeren der Basisschicht unverträglichen Polymeren in Frage, insbesondere solche wie HDPE, Copolymere von cyclischen Olefinen wie Norbornen oder Tetracyclododecen mit Ethylen oder Propylen, Polyester, Polystyrole, Polyamide, halogenierte organische Polymere, wobei Polyester wie beispielsweise Polybutylenterephthalate bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Die Dichte der Folie kann je nach Zusammensetzung der Basisschicht in einem Bereich von 0,5 bis 0,85g/cm3 variieren. Dabei tragen Vakuolen zu einer Erniedrigung der Dichte bei, wohingegen Pigmente, wie z.B. TiO2 auf Grund des höheren spezifischen Gewichts die Dichte der Folie erhöhen. Vorzugsweise beträgt die Dichte der Folie auf Grund der vakuolenhaltigen Basisschicht 0,6 bis 0,8 g/cm3.

Zusätzlich kann die Basisschicht übliche Additive wie Neutralisationsmittel, Stabilisatoren, Antistatika und/oder Gleitmittel in jeweils wirksamen Mengen enthalten. Die nachstehenden Angaben in Gew.-% beziehen sich jeweils auf das Gewicht der Basisschicht.

Bevorzugte Antistatika sind Glycerinmonostearate, Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit □-Hydroxy-(C1-C4)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-% in der Basisschicht. Insbesondere geeignete aliphatische Säureamide sind Erucasäureamid und Stearylamid.

Als Stabilisatoren, die auch in den übrigen Schichten eingesetzt werden, können die üblichen stabilisierend wirkenden Verbindungen für Ethylen-, Propylen- und andere Olefinpolymere eingesetzt werden. Deren Zusatzmenge liegt zwischen 0,05 und 2 Gew.-%. Besonders geeignet sind phenolische und phosphitische Stabilisatoren wie Tris-2,6-dimethylphenylphosphit. Phenolische Stabilisatoren mit einer Molmasse von mehr als 500 g/mol werden bevorzugt, insbesondere Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxybenzyl)benzol. Dabei werden phenolische Stabilisatoren allein in einer Menge von 0,1 bis 0,6 Gew.-%, insbesondere 0,1 bis 0,3 Gew.-%, phenolische und phosphitische Stabilisatoren im Verhältnis 1 : 4 bis 2 : 1 und in einer Gesamtmenge von 0,1 bis 0,4 Gew.-%, insbesondere 0,1 bis 0,25 Gew.-%, eingesetzt.

Neutralisationsmittel, die auch in den übrigen Schichten eingesetzt werden, sind vorzugsweise Dihydrotalcit, Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m2/g. Im allgemeinen werde 0,02 bis 0,1 Gew.-% zugesetzt.

Die Zwischenschichten enthalten 70 bis 100 Gew.-%, vorzugsweise 80 bis 99 Gew.-% Propylenhomopolymer. Bevorzugt sind isotaktische Propylenhomopolymere, die gegebenenfalls bis zu 2 Gew.-% Ethylen als Comonomer enthalten können (Minicopo), mit einem Schmelzpunkt von 140 bis 170 °C, vorzugsweise von 150 bis 165 °C, und einen Schmelzflußindex (Messung DIN 53 735 bei 21,6 N Belastung und 230 °C) von 1,0 bis 10g/10min, vorzugsweise von 1,5 bis 6,5g/10min. Der n-heptanlösliche Anteil des Polymeren beträgt im allgemeinen 0,5 bis 10 Gew.-%, vorzugsweise 2 bis 5 Gew.-% bezogen auf das Ausgangspolymere. Die Molekulargewichtsverteilung des Propylenpolymeren kann variieren. Das Verhältnis des Gewichtsmittels Mw zum Zahlenmittel Mn liegt im allgemeinen zwischen 1 und 15, vorzugsweise bei 2 bis 10, ganz besonders bevorzugt bei 2 bis 6. Eine derartig enge Molekulargewichtsverteilung des Propylenhomopolymeren der Zwischenschicht erreicht man beispielsweise durch dessen peroxidischen Abbau oder durch Herstellung des Polypropylens mittels geeigneter Metallocenkatalysatoren.

Vorzugsweise werden in den Zwischenschichten hochisotaktische bzw. hochkristalline Polypropylene, eingesetzt deren Isotaktizität nach ¹³C-NMR mindestens 95%, vorzugsweise 96 - 99% beträgt, eingesetzt werden. Diese Ausführungsform zeichnet sich durch hohe Steifigkeiten aus. Es wurde gefunden, daß Zwischenschichten aus hochisotaktischen Propylenpolymeren gleichzeitig die vakuolenhaltige Basisschicht so abdecken, daß die Basisschicht keinen Einfluß mehr auf die Oberflächenrauheit hat. Dies gilt umso ausgeprägter je dicker die Zwischenschichten sind. Gleichzeitig ist jedoch die Verbesserung der Steifigkeit umso ausgeprägter je dicker die Zwischenschichten sind. Die Verbesserung der Steifigkeit durch dicke Zwischenschichten aus hochisotaktischen Propylenpolymeren beeinträchtigt somit gleichzeitig die Entstapelbarkeit sowie die Vereinzelung der Folie bei der Anwendung als Etikett. Überraschenderweise tritt diese negative Auswirkung nicht ein, wenn gleichzeitig die Rauheit der äußeren Oberfläche durch Zusatz eines unverträglichen Polyethylens auf 1 - 3 µm erhöht wird. Die Erfindung wirkt sich somit besonders positiv bei Ausführungsformen mit Zwischenschichten aus hochisotaktischen Propylenpolymeren aus.

Die Zwischenschichten können die für die einzelnen Schichten beschriebenen üblichen Additive wie Antistatika, Neutralisationsmittel, Gleitmittel und/oder Stabilisatoren enthalten. Die Dicke der Zwischenschichten beträgt im allgemeinen jeweils mindestens 3 µm und liegt vorzugsweise im Bereich von 4 - 12 µm, insbesondere 6 bis 10 µm.

Für Ausführungsformen bei denen ein weißes Erscheinungsbild mit hoher Deckkraft des Etiketts gewünscht ist enthält eine, gegebenenfalls enthalten beide, Zwischenschicht/en Pigmente, insbesondere TiO2, beispielsweise in einer Menge von 2 bis 8 Gew.-%, bezogen auf das Gewicht der Zwischenschicht. Die Zwischenschichten weisen jedoch im allgemeinen keine Vakuolen und somit eine Dichte von ≥ 0,9g/cm³ auf.

Die Gesamtdicke der Etikettenfolie beträgt mindestens 30µm und liegt vorzugsweise in einem Bereich von 35 bis 90µm, insbesondere 45 bis 75µm. Die innere Deckschicht ist im Sinne der vorliegenden Erfindung diejenige Deckschicht, welche beim, bzw. nach dem Etikettieren dem Behältnis zugewandt ist. Die äußere Deckschicht entsprechend die gegenüberliegende Seite.

Überraschenderweise läßt sich die erfindungsgemäße Folie ohne Störung mit hohen Taktzahlen verarbeiten.

Beispielsweise kann die Folie erfindungsgemäß mit einer Geschwindigkeit von bis zu 12000 Bögen, vorzugsweise 3000 bis 9000 Bögen pro Stunde vereinzelt und bedruckt werden. Auch die bedruckte Folie läßt sich anschließend beim Stanzprozeß problemlos entstapeln.

Die Folie kann besonders vorteilhaft als In-Mould Etikett verwendet, wobei die In-Mould Etikettierung im Spritzgußverfahren bevorzugt ist.

Die Erfindung betrifft weiterhin ein Verfahren zur Herstellung der erfindungsgemäßen Polyolefinfolie nach dem an sich bekannten Coextrusionsverfahren. Im Rahmen dieses Verfahrens werden die den einzelnen Schichten der Folie entsprechenden Schmelzen gleichzeitig und gemeinsam durch eine Flachdüse coextrudiert, die so erhaltene Folie zur Verfestigung auf einer oder mehreren Walze/n abgezogen, die mehrschichtige Folie anschließend gestreckt (orientiert), die gestreckte Folie thermofixiert und gegebenenfalls an der zur Behandlung vorgesehenen Oberflächenschicht plasma-, corona- oder flammbehandelt.

Eine biaxiale Streckung (Orientierung) wird sequentiell oder simultan durchgeführt. Die sequentielle Streckung wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist. Die weitere Beschreibung der Folienherstellung erfolgt am Beispiel einer Flachfolienextrusion mit anschließender sequentialer Streckung.

Zunächst wird wie beim Extrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen bei einer Temperatur von 10 bis 100 °C, vorzugsweise 10 bis 50°C, abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man vorzugsweise bei einer Temperatur von 70 bis 130 °C, vorzugsweise 80 bis 110°C, zweckmäßigerweise mit Hilfe zweier entsprechend dem angestrebten Streckverhältnis verschieden schnellaufender Walzen durchführen und das Querstrecken vorzugsweise bei einer Temperatur von 120 bis 180 °C mit Hilfe eines entsprechenden Kluppenrahmens. Die Längsstreckverhältnisse liegen im Bereich von 3 bis 8 vorzugsweise 4 bis 6. Die Querstreckverhältnisse liegen im Bereich von 5 bis 10, vorzugsweise 7 bis 9.

An die Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Bevorzugt wird/werden nach der biaxialen Streckung eine oder beide Oberfläche/n der Folie nach einer der bekannten Methoden plasma-, corona- oder flammbehandelt. Die Behandlungsintensität liegt im allgemeinen im Bereich von 35 bis 50 mN/m, vorzugsweise 37 bis 45 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im Wesentlichen unpolaren Polymermatrix entstehen.

Die Oberflächenbehandlung wie z.B. Corona-Behandlung kann sowohl sofort bei der Herstellung der Etikettenfolie wie auch zu einem späteren Zeitpunkt, z.B. unmittelbar vor dem Bedrucken des Etiketts erfolgen.

Zur Charakterisierung der Rohstoffe und der Folien wurden die folgenden Meßmethoden benutzt:

### Schmelzflußindex

Der Schmelzflußindex der Propylenpolymeren wurde nach DIN 53 735 bei 2,16 kg Belastung und 230 °C gemessen und bei 190°C und 2,16 kg für Polyethylene.

### Schmelzpunkte

DSC-Messung, Maxima der Schmelzkurve, Aufheizgeschwindigkeit 20 K/min.

### Dichte

Die Dichte wird nach DIN 53 479, Verfahren A, bestimmt.

### Rauheitsmessung

Als Maß für die Rauheit wurden die Rauheitswerte Rz der Folien in Anlehnung an DIN 4768 Teil 1 und DIN ISO 4288 sowie DIN 4772 und 4774 mittels eines Perthometer Typ S8P der Firma Feinprüf Perthen GmbH, Göttingen, nach dem Tastschnitt-Verfahren gemessen. Der Meßkopf, ein Einkufentastsystem gemäß DIN 4772, war mit einer Tastspitze mit dem Radius 5 µm und einem Flankenwinkel von 90° bei einer Auflagekraft von 0,8 bis 1,12 mN sowie einer Gleitkufe mit Radius 25 mm in Gleitrichtung ausgestattet. Der vertikale Meßbereich wurde auf 62,5 µm, die Taststrecke auf 5,6 mm und der Cut-off des RC-Filters gemäß DIN 4768/1 auf 0,25 mm eingestellt. Alle Rz-Werte in der vorliegenden Anmeldung beziehen sich auf diesen Cut off von 0,25mm.

### Biegesteifigkeit

Die Biegesteifigkeit kennzeichnet den Widerstand, den eine Probe einem Biegen entgegensetzt. Die Biegesteifigkeit wird nach DIN 53350 gemessen.

### Isotaxie

Die Isoatxie wurde mittels 13 C-NMR am n-heptan unlöslichen Anteil der Folie nach der Triadenmethode bestimmt. Diese Methode ist ausführlich in EP 0645426A1 (Seiten 9 -12) beschrieben.

Die Erfindung wird nunmehr durch Beispiele zusätzlich erläutert:

### Beispiel 1

Nach dem Coextrusionsverfahren wurde aus einer Breitschlitzdüse eine fünfschichtige Vorfolie extrudiert. Diese Vorfolie wurde auf einer Kühlwalze abgezogen, verfestigt und anschließend in Längs- und Querrichtung orientiert und abschließend fixiert. Die Oberfläche der äußeren Deckschicht wurde mittels Corona zur Erhöhung der Oberflächenspannung vorbehandelt. Die fünfschichtige Folie hatte einen Schichtaufbau erste (äußere) Deckschicht/erste Zwischenschicht/Basisschicht/zweite Zwischenschicht/zweite (innere) Deckschicht. Die einzelnen Schichten der Folie hatten die folgende Zusammensetzung:
Erste/äußere Deckschicht (1,0 µm):
   ~80 Gew.-% Ethylen-Propylen-Copolymerisat mit einem Ethylen-Anteil von 4 Gew.-% und einem Schmelzpunkt von 135°C; Schmelzflußindex von 7,3g/10 min bei 230 °C und 2,16 kg Belastung (DIN 53 735).
   -20 Gew.-% MDPE mit einem MFI von 0,28g/10min (2,16kg und 190°C); Dichte von 0,937g/ccm³ und einem Schmelzpunkt von 126°C 0,1 Gew.-% SiO₂ Antiblockmittel
Erste Zwischenschicht (7µm)
   100 Gew.-% Propylenhomopolymerisat (PP) mit einem Dekalin-löslichen Anteil von 1,8 Gew.-% (bezogen auf 100 % PP) und einem Schmelzpunkt von 166 °C; einem Schmelzflußindex von 3,2 g/10 min bei 230 °C und 2,16 kg Belastung (DIN 53 735) und einer ¹³C-NMR Isotaxie von 98,2%
Basisschicht
   85,8 Gew.-%Propylenhomopolymerisat (PP) mit einem Dekalin-löslichen Anteil von 1,8 Gew.-% (bezogen auf 100 % PP) und einem Schmelzpunkt von 166 °C; einem Schmelzflußindex von 3,2 g/10 min bei 230 °C und 2,16 kg Belastung (DIN 53 735) und einer ¹³C-NMR Isotaxie von 98,2% und
   10 Gew.-% Calciumcarbonat mit einem mittleren Teilchendurchmesser von 3,5 µm 4% Gew.-% TiO2 mit einem mittleren Teilchendurchmesser von 0,1 bis 0,3 µm 0,2 Gew.-% tertiäres aliphatische Amin als Antistatikum (Armostat 300)
Zweite Zwischenschicht (3,6µm)
   100 Gew.-% Propylenhomopolymerisat (PP) mit einem Dekalin-löslichen Anteil von 1,8 Gew.-% (bezogen auf 100 % PP) und einem Schmelzpunkt von 166 °C; einem Schmelzflußindex von 3,2 g/10 min bei 230 °C und 2,16 kg Belastung (DIN 53 735) und einer ¹³C-NMR Isotaxie von 98,2%
Zweite/innere Deckschicht (3,0µm):
   ~65 Gew.-% Ethylen-Propylen-Copolymerisat mit einem Ethylen-Anteil von 4 Gew.-% (bezogen auf das Copolymer) und einem Schmelzpunkt von 135°C; und einem Schmelzflußindex von 7,3g/10 min bei 230 °C und 2,16 kg Belastung (DIN 53 735)
   35 Gew.-% MDPE mit einem MFI von 0,28g/10min (2,16kg und 190°C); Dichte von 0,937g/ccm³ und einem Schmelzpunkt von 126°C 0,1 Gew.-% SiO₂ Antiblockmittel

Alle Schichten der Folie enthielten zusätzlich Stabilisator und Neutralisationsmittel in üblichen Mengen.

Im einzelnen wurden die folgenden Bedingungen und Temperaturen bei der Herstellung der Folie gewählt:

| | |
|---|---|
| Extrusion: | Extrusionstemperatur ca. 250 °C |
| Abkühlwalze: | Temperatur 25°C, |
| Längsstreckung: | T = 120 °C |
| Längsstreckung um den | Faktor 4,8 |
| Querstreckung: | T = 155 °C |
| Querstreckung um den | Faktor 8 |
| Fixierung | T = 133°C |

Die Folie wurde auf der Oberfläche der äußeren Deckschicht mittels Corona oberflächenbehandelt. Die Folie hatte eine Dicke von 65µm. Die Rauheit Rz betrug auf der Oberfläche der ersten Deckschicht 1,4µm und auf der Oberfläche der zweiten Deckschicht 4,2µm.

### Beispiel 2:

Es wurde eine Folie nach Beispiel 1 hergestellt. Im Unterschied zu Beispiel 1 wurde die Dicke der äußeren Deckschicht auf 2,5µm angehoben. Um die Gesamtdicke der Folie zu erhalten wurde gleichzeitig die Dicke der Basisschicht entsprechend um ca. 1,5 µm reduziert. Die übrige Zusammensetzung und die Verfahrensbedingungen bei der Herstellung der Folie wurden nicht verändert. Die Folie hatte eine Dicke von 65µm. Die Rauheit Rz auf der Oberfläche der ersten Deckschicht erhöhte sich leicht auf 2,0µm und betrug auf der Oberfläche der zweiten Deckschicht weiterhin 4,2µm.

### Beispiel 3:

Es wurde eine Folie nach Beispiel 1 hergestellt. Im Unterschied zu Beispiel 1 wurde beiden Zwischenschichten 3,0 Gew.-% TiO₂ zugesetzt und der Propylenhomopolymer-Anteil entsprechend auf 97 Gew.-% reduziert. Die übrige Zusammensetzung und die Verfahrensbedingungen bei der Herstellung der Folie wurden nicht verändert. Die Folie hatte eine Dicke von 65µm. Die Rauheit Rz auf der Oberfläche der ersten Deckschicht erhöhte sich auf 2,5µm und betrug auf der Oberfläche der zweiten Deckschicht 5,4µm.

### Vergleichsbeispiel 1:

Es wurde eine Folie nach Beispiel 1 hergestellt. Im Unterschied zu Beispiel 1 wurde in beiden Deckschichten der MDPE Anteil auf 0% reduziert und der Anteil an Copolymer auf ca. 100 Gew.-% angehoben. Die übrige Zusammensetzung und die Verfahrensbedingungen bei der Herstellung der Folie wurden nicht verändert. Die Folie hatte eine Dicke von 65µm. Die Rauheit Rz auf der Oberfläche der ersten Deckschicht betrug 0,6µm und auf der Oberfläche der zweiten Deckschicht 1,0µm.

### Vergleichsbeispiel 2:

Es wurde eine Folie nach Beispiel 1 hergestellt. Im Unterschied zu Beispiel 1 wurde in der äußeren Deckschichten der MDPE Anteil auf 0% reduziert und der Anteil an Copolymer auf ca. 100 Gew.-% angehoben. Die übrige Zusammensetzung und die Verfahrensbedingungen bei der Herstellung der Folie wurden nicht verändert. Die Folie hatte eine Dicke von 65µm. Die Rauheit Rz auf der Oberfläche der ersten Deckschicht betrug 0,6µm und auf der Oberfläche der zweiten Deckschicht weiterhin 4,2µm.

### Vergleichsbeispiel 3:

Es wurde eine Folie nach Beispiel 2 hergestellt. Im Unterschied zu Beispiel 2 wurde in der äußeren Deckschichten der MDPE Anteil auf 35 Gew.-% erhöht und der Anteil an Copolymer auf ca. 65 Gew.-% reduziert. Die übrige Zusammensetzung und die Verfahrensbedingungen bei der Herstellung der Folie wurden nicht verändert. Die Folie hatte eine Dicke von 65µm. Die Rauheit Rz auf der Oberfläche der ersten Deckschicht betrug 3,5µm und auf der Oberfläche der zweiten Deckschicht weiterhin 4,2µm.

### Vergleichsbeispiel 4:

Es wurde eine Folie nach Beispiel 2 hergestellt. Im Unterschied zu Beispiel 2 wurde in der inneren Deckschichten der MDPE Anteil auf 20 Gew.-% erniedrigt und der Anteil an Copolymer auf ca. 80 Gew.-% erhöht. Zusätzlich wurde die Zusammensetzung der beiden Zwischenschichten geändert. Beide Zwischenschichten waren jetzt wie die Basisschicht von Beispiel 1 zusammengesetzt. Damit wurde de facto eine dreischichtige Folie hergestellt. Die übrige Zusammensetzung und die Verfahrensbedingungen bei der Herstellung der Folie wurden nicht verändert. Die Folie hatte eine Dicke von 65µm. Die Rauheit Rz auf der Oberfläche der ersten Deckschicht betrug 4,1 µm und auf der Oberfläche der zweiten Deckschicht 7,4µm.

### Vergleichsbeispiel 5:

Es wurde eine Folie nach Vergleichsbeispiel 2 hergestellt. Im Unterschied zu Vergleichsbeispiel 2 wurde in beiden Zwischenschichten 3,0 Gew.-% TiO₂ zugesetzt und der Propylenhomopolymer-Anteil entsprechend reduziert. Die übrige Zusammensetzung und die Verfahrensbedingungen bei der Herstellung der Folie wurden nicht verändert. Die Folie hatte eine Dicke von 65µm. Die Rauheit Rz auf der Oberfläche der ersten Deckschicht erhöhte sich auf 1,5µm und betrug auf der Oberfläche der zweiten Deckschicht 5,4µm.

Die Biegesteifigkeit der Folien nach den Beispielen und den Vergleichsbeispielen wurde verglichen. Die Folien wurden dann auf der äußeren Deckschicht bedruckt, zugeschnitten und gestapelt. Die so vorbereiteten Etikettenstapel wurden an einer Spritzgußanlage mit einer Vorrichtung zur In-Mold Etikettierung bereitgestellt und als In-mold Etiketten verwendet. Die Ergebnisse dieser Versuche sind in der nachstehend Tabelle zusammengefaßt:

| | Biegesteifigkeit | Druckbild | Entstapeln |
|---|---|---|---|
| Beispiel 1 | +++ | ++ | +++ |
| Beispiel 2 | +++ | ++ | +++ |
| Beispiel 3 | +++ | +* | +++ |
| Vergleichsbeispiel 1 | +++ | +++ | - - - |
| Vergleichsbeispiel 2 | +++ | +++ | - - - |
| Vergleichsbeispiel 3 | +++ | - | +++ |
| Vergleichsbeispiel 4 | - - - | -- | -- |
| Vergleichsbeispiel 5 | +++ | ++ | - |

| | | | |
|---|---|---|---|
| *das Druckbild zeichnete sich durch einen guten Weißeindruck aus | | | |

## Patentansprüche

1. Mehrschichtige, opake, biaxial orientierte Polyolefinfolie mit einer Dicke von mindestens 30µm aus einer vakuolenhaltigen Basisschicht und beidseitig darauf aufgebrachten Zwischenschichten und beidseitigen Deckschichten, **dadurch gekennzeichnet, daß** beide Zwischenschichten eine Dicke von mindestens 3µm aufweisen und mindestens 70 Gew.-% eines Propylenhomopolymeren enthalten und beide Deckschichten aus einer Mischung aus inkompatiblen Polymeren aufgebaut sind und die innere Deckschicht eine Oberflächenrauheit Rz von mindestens 3,0µm (cut off 0,25mm) und die äußere Deckschicht eine Rauheit von 1 bis 3µm (cut off 0,25mm) aufweist, wobei die Rauheit der inneren Deckschicht um mindestens 1,5 µm größer ist als die Rauheit der äußeren Deckschicht.

2. Folie nach Anspruch 1, **dadurch gekennzeichnet, daß** das beide Deckschichten aus einer Mischung aus Propylenhomopolymer, Propylencopolymer und/oder Propylenterpolymer und einem Polyethylen aufgebaut sind.

3. Folie nach Anspruch 1 oder 2, **dadurch gekennzeichnet, daß** die innere Deckschicht 30 bis 90 Gew.-% Propylenhomopolymer, Propylencopolymer und/oder Propylenterpolymer, bezogen auf das Gewicht der inneren Deckschicht, enthält.

4. Folie nach einem der Ansprüche 1 bis 3, **dadurch gekennzeichnet, daß** die innere Deckschicht 10 bis 70 Gew.-% des Polyethylens, vorzugsweise HDPE oder MDPE, bezogen auf das Gewicht der inneren Deckschicht, enthält.

5. Folie nach einem der Ansprüche 1 bis 4, **dadurch gekennzeichnet, daß** die äußere Deckschicht 75 bis 97 Gew.-% Propylenhomopolymer, Propylencopolymer und/oder Propylenterpolymer und 3 bis 25 gew.-% Polyethylen, vorzugsweise HDPE oder MDPE, bezogen auf das Gewicht der äußeren Deckschicht, enthält.

6. Folie nach einem der Ansprüche 1 bis 5, **dadurch gekennzeichnet, daß** beide Deckschichten jeweils <1Gew.-% partikelförmige Füllstoffe, insbesondere Antiblockmittel enthalten.

7. Folie nach einem der Ansprüche 1 bis 6, **dadurch gekennzeichnet, daß** das Propylenhomopolymer der Zwischenschichten jeweils 0 bis 2 Gew.-% Ethylen enthält.

8. Folie nach einem der Ansprüche 1 bis 7, **dadurch gekennzeichnet, daß** eine oder beide Zwischenschicht/en hochisotaktisches Polypropylenhomopolymer enthalten.

9. Folie nach einem der Ansprüche 1 bis 8, **dadurch gekennzeichnet, daß** eine oder beide Zwischenschichtlen TiO₂ enthalten.

10. Folie nach einem der Ansprüche 1 bis 9, **dadurch gekennzeichnet, daß** eine oder beide Zwischenschicht/en hochisotaktisches Polypropylenhomopolymer mit einer 13-C-NMR Isotaxie (Triade) von 96 - 99% enthalten.

11. Folie nach einem der Ansprüche 1 bis 10, **dadurch gekennzeichnet, daß** die Dicke jeder Zwischenschicht 5 bis 10µm beträgt.

12. Folie nach einem der Ansprüche 1 bis 11, **dadurch gekennzeichnet, daß** beide Zwischenschichten eine Dichte von ≥0,9g/cm³ aufweisen.

13. Verwendung einer Folie nach einem der Ansprüche 1 bis 12 als In-Mould Etikett im Spritzguß.

## Claims

1. A multi-layered, opaque, biaxially oriented polyolefin film having a thickness of at least 30 µm consisting of a vacuole-containing base layer and intermediate layers applied to both sides thereof and cover layers applied to both sides, **characterised in that** both intermediate layers have a thickness of at least 3 µm and contain at least 70% by weight of a propylene homopolymer, and both cover layers are constructed from a mixture of incompatible polymers, and the inner cover layer has a surface roughness Rz of at least 3.0 µm (cut off 0.25 mm) and the outer cover layer has a roughness from 1 to 3 µm (cut off 0.25 mm), wherein the roughness of the inner cover layer is at least 1.5 µm greater than the roughness of the outer cover layer.

2. The film according to Claim 1, **characterised in that** both cover layers are constructed from a mixture of propylene homopolymer, propylene copolymer and/or propylene terpolymer and a polyethylene.

3. The film according to Claim 1 or 2, **characterised in that** the inner cover layer contains 30 to 90% by weight propylene homopolymer, propylene copolymer and/or propylene terpolymer relative to the weight of the inner cover layer.

4. The film according to any one of Claims 1 to 3, **characterised in that** the inner cover layer contains 10 to 70% by weight polyethylene, preferably HDPE or MDPE, relative to the weight of the inner cover layer.

5. The film according to any one of Claims 1 to 4, **characterised in that** the outer cover layer contains 75 to 97% by weight propylene homopolymer, propylene copolymer and/or propylene terpolymer and 3 to 25% by weight polyethylene, preferably HDPE or MDPE, relative to the weight of the outer cover layer.

6. The film according to any one of Claims 1 to 5, **characterised in that** both cover layers contain <1% by weight particulate filler materials, in particular antiblocking agents.

7. The film according to any one of Claims 1 to 6, **characterised in that** the propylene homopolymer of the intermediate layers contains 0 to 2% by weight ethylene in each case.

8. The film according to any one of Claims 1 to 7, **characterised in that** one or both intermediate layer(s) contain(s) highly isotactic propylene homopolymer.

9. The film according to any one of Claims 1 to 8, **characterised in that** one or both intermediate layer(s) contain(s) TiO₂.

10. The film according to any one of Claims 1 to 9, **characterised in that** one or both intermediate layer(s) contain(s) highly isotactic propylene homopolymer having a 13-C-NMR isotaxy (triad) of 96-99%.

11. The film according to any one of Claims 1 to 10, **characterised in that** the thickness of each intermediate layer is 5 to 10 µm.

12. The film according to any one of Claims 1 to 11, **characterised in that** both intermediate layers have a density of ≥ 0.9 g/cm³.

13. Use of a film according to any one of Claims 1 to 12 as an in-mould label in injection moulding.

## Revendications

1. Feuille multicouche en polyoléfine, de nature opaque et biaxialement orientée, d'une épaisseur supérieure ou égale à 30 µm, constituée d'une couche de base contenant des vacuoles et, sur les deux côtés, de couches intermédiaires appliquées sur cette dernière ainsi que, sur les deux côtés, de couches de couverture, **caractérisée en ce que** les deux couches intermédiaires présentent une épaisseur supérieure ou égale à 3 µm et contiennent au moins 70 % en poids d'un homopolymère de propylène, et les deux couches de couverture sont composées d'un mélange de polymères incompatibles, et la couche de couverture intérieure présente une rugosité de surface Rz d'au moins 3,0 µm (limite de coupure [cut off] 0,25 mm), et la couche de couverture extérieure présente une rugosité comprise entre 1 et 3 µm (limite de coupure [cut off] 0,25 mm), la rugosité de la couche de couverture intérieure étant supérieure d'au moins 1,5 µm à la rugosité de la couche de couverture extérieure.

2. Feuille selon la revendication 1, **caractérisée en ce que** les deux couches de couverture sont composées d'un mélange d'homopolymère de propylène, de copolymère de propylène et/ou de terpolymère de propylène et d'un polyéthylène.

3. Feuille selon les revendications 1 ou 2, **caractérisée en ce que** la couche de couverture intérieure contient 30 à 90 % en poids d'homopolymère de propylène, de copolymère de propylène et/ou de terpolymère de propylène, par rapport au poids de la couche de couverture intérieure.

4. Feuille selon l'une des revendications 1 à 3, **caractérisée en ce que** la couche de couverture intérieure contient 10 à 70 % en poids dudit polyéthylène, s'agissant préférentiellement de PE-HD ou de PE-MD, par rapport au poids de la couche de couverture intérieure.

5. Feuille selon l'une des revendications 1 à 4, **caractérisée en ce que** la couche de couverture extérieure contient 75 à 97 % en poids d'homopolymère de propylène, de copolymère de propylène et/ou de terpolymère de propylène, et 3 à 25 % en poids de polyéthylène, s'agissant préférentiellement de PE-HD ou de PE-MD, par rapport au poids de la couche de couverture extérieure.

6. Feuille selon l'une des revendications 1 à 5, **caractérisée en ce que** les deux couches de couverture contiennent chacune < 1 % en poids de charges sous forme de particules, s'agissant notamment d'agents antiadhérents.

7. Feuille selon l'une des revendications 1 à 6, **caractérisée en ce que** ledit homopolymère de propylène contient, dans chacune des couches intermédiaires, 0 à 2 % en poids d'éthylène.

8. Feuille selon l'une des revendications 1 à 7, **caractérisée en ce que** l'une des couches intermédiaires, ou les deux, contien(nen)t de l'homopolymère de polypropylène hautement isotactique.

9. Feuille selon l'une des revendications 1 à 8, **caractérisée en ce que** l'une des couches intermédiaires, ou les deux, contien(nen)t du TiO₂.

10. Feuille selon l'une des revendications 1 à 9, **caractérisée en ce que** l'une des couches intermédiaires, ou les deux, contien(nen)t de l'homopolymère de polypropylène hautement isotactique dont l'isotacticité (triade), établie par 13-C-NMR, est comprise entre 96 et 99 %.

11. Feuille selon l'une des revendications 1 à 10, **caractérisée en ce que** l'épaisseur de chacune des couches intermédiaires est comprise entre 5 et 10 µm.

12. Feuille selon l'une des revendications 1 à 11, **caractérisée en ce que** les deux couches intermédiaires présentent une densité ≥ 0,9 g/cm³.

13. Utilisation d'une feuille selon l'une des revendications 1 à 12 en tant qu'étiquette que l'on place dans le moule lors du moulage par injection.
